Europäisches Patentamt

European Patent Office

Office européen des brevets

(11) Numéro de publication: **0 296 031 B1**

(12) **FASCICULE DE BREVET EUROPEEN**

(45) Date de publication de fascicule du brevet: **30.12.92** (51) Int. Cl.5: **F23C 3/00**, F16L 7/00

(21) Numéro de dépôt: **88401408.5**

(22) Date de dépôt: **09.06.88**

(54) **Tube interne en céramique notamment pour tube radiant en doigt de gant à recirculation.**

(30) Priorité: **11.06.87 FR 8708146**

(43) Date de publication de la demande:
**21.12.88 Bulletin 88/51**

(45) Mention de la délivrance du brevet:
**30.12.92 Bulletin 92/53**

(84) Etats contractants désignés:
**AT BE CH DE ES GB GR IT LI NL SE**

(56) Documents cités:
EP-A- 0 191 910          BE-A- 441 140
DE-A- 2 940 245          DE-A- 3 105 406
DE-B- 1 551 762          DE-B- 2 314 118
US-A- 2 478 732

(73) Titulaire: **GAZ DE FRANCE**
**23, rue Philibert Delorme**
**F-75017 Paris(FR)**

(72) Inventeur: **Cassagne, Jean-Pierre**
**8bis Villa du Châtelet**
**F-94120 Fontenay Sous Bois(FR)**
Inventeur: **Scrive, Laurent**
**2bis rue Rebeval**
**F-75019 Paris(FR)**

(74) Mandataire: **Berger, Helmut et al**
**Cabinet Z. WEINSTEIN 20, avenue de Fried-**
**land**
**F-75008 Paris(FR)**

## Description

La présente invention concerne un tube interne en céramique notamment pour tube radiant à circulation de gaz brûlé fournis par un brûleur, du type décrit dans le préambule de la revendication principale.

Un tel tube interne en céramique est connu par EP-A- 0 191 910. Dans ce cas l'assemblage de deux tronçons de tube axialement alignés se fait par emmanchement de l'extrémité d'un tronçon sur l'extrémité de l'autre et par l'utilisation d'un organe annulaire entourant coaxialement les deux extrémités emmanchées.

Cette façon d'assembler des tronçons de tube alignés est désavantageuse parce qu'elle impose une configuration particulière des extrémités des tronçons à assembler et interdit toute excursion radiale et angulaire des tronçons de leur position axialement alignée.

La présente invention a pour but de proposer un tube interne en céramique qui ne présente pas les inconvénients qui viennent d'être énoncés.

Pour atteindre ce but, le tube interne comprend les caractéristiques qui sont énoncées dans la partie caractérisante de la revendication principale.

Une disposition bout à bout de tronçons de tube et des moyens d'assemblage formés par un manchon de la forme générale décrite dans la revendication principale sont connus par DE-A- 3 105 406. Mais, les extrémités des tubes sont emmanchées par force dans le manchon d'assemblage, par exemple, à l'aide de coups de marteau. Il est précisé dans le document que le procédé d'assemblage peu même impliquer une déformation du manchon lors de son emmanchement à force sur les tronçons de tube raccordés. Cette technique de raccordement de tronçons de tube présuppose que ceux-ci sont réalisés en un matériau déformable, notamment en métal.

Il est évident que le raccordement de tronçon de tube selon DE-A-3 105 406 est incompatible avec des tronçons de tube en céramique, en raison de l'emmanchement à force. En effet, l'utilisation des manchons d'assemblage connus aboutirait à un raccord qui entraînerait l'endommagement des extrémités de tube.

Mais grâce aux caractéristiques de la partie caractérisante de la revendication principale de la présente invention, il est possible d'utiliser un assemblage bout à bout, à l'aide de manchons d'assemblage, même pour des tronçons de tube en céramique.

D'autres caractéristiques avantageuses de l'invention sont décrites dans les revendications dépendantes.

L'invention sera mieux comprise au cours de la description explicative qui va suivre faite en référence aux dessins schématiques annexés donnés uniquement à titre d'exemple illustrant un mode de réalisation de l'invention et dans lequel :

la figure 1 est une vue en coupe axiale d'un tube radiant comprenant un tube interne selon la présente invention;

la figure 2 est une vue en coupe selon la ligne II-II de la figure 1, et

la figure 3 est une vue axiale d'un manchon d'assemblage selon la présente invention.

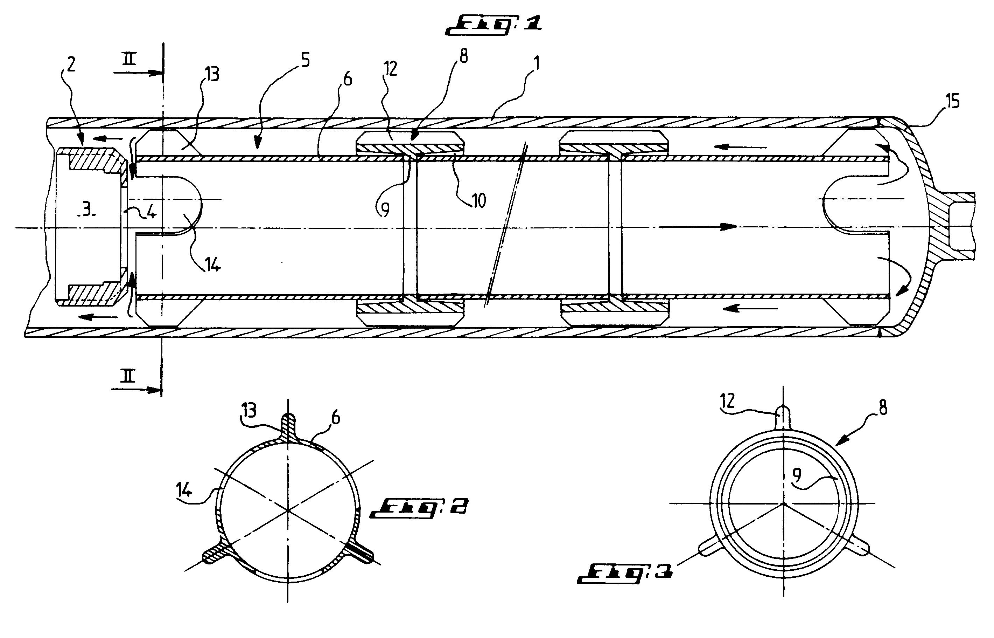

La figure 1 montre un tube interne en céramique selon l'invention incorporé à un tube radiant en doigt de gant à recirculation, qui comprend un tube enveloppe externe 1 par exemple en alliage réfractaire. Ce tube forme également l'enveloppe extérieure d'un dispositif brûleur dont la partie de sortie 2 est indiquée schématiquement sur la figure. Les références 3 et 4 désignent respectivement la chambre de combustion et la sortie des gaz brûlés destinés à se propager dans le tube interne portant le chiffre de référence 5. Celui-ci est en céramique thermo-mécanique et se compose d'un certain nombre de tronçons 6 axialement alignés et reliés entre eux par des moyens d'articulation, c'est-à-dire de moyens de liaison souple. On constate que les tronçons de tube 6 sont disposés bout-à-bout. Chacun des moyens de liaison est réalisé sous forme d'un manchon 8, par exemple en céramique, entourant coaxialement les extrémités en bout-à-bout des deux tronçons de tube 6 reliés. La surface radialement interne du manchon 8 porte, avantageusement au milieu de sa longueur, une collerette annulaire 9 qui fait radialement saillie vers l'intérieur et s'engage entre les deux extrémités des tronçons à assembler. Le diamètre externe de la collerette est un peu plus grand que le diamètre externe des tronçons de façon à laisser subsister un certain jeu radial tenant compte d'un désaxage des tronçons tout en assurant l'étanchéité de la jonction. Les parties de surface interne 10 situées de part et d'autre de la collerette 9 présentent un diamètre qui augmente progressivement en direction de l'extrémité des manchons. L'augmentation du diamètre est déterminée de façon à permettre au tronçon 6 de suivre, par un désaxage axial approprié pouvant atteindre quelque degrés, le mouvement de fluage du tube enveloppe 1. Ce dernier peut être ainsi réalisé en un alliage réfractaire, c'est-à-dire en un matériau ayant un coefficient de délatation et un comportement à haute température très différent du matériau constituant le tube interne 5.

Chaque manchon 8 comporte sur sa surface cylindrique externe des nervures de centrage 12 dans l'enveloppe externe (figure 3). Les premier et dernier tronçons 6 du tube 5 comprennent au niveau de leur extrémité libre des nervures de centrage 13 et des découpes ou ouies en forme de U 14 pratiquées dans la paroi cylindrique des tronçons entre deux nervures de centrage.

Le tube interne 5 est ouvert à ses deux extrémités, ce qui permet la circulation des gaz brûlés sortant de la chambre de combustion 3 dans ce tube et dans l'espace annulaire crée entre le tube interne 5 et le tube enveloppe 1 de la manière indiquée par des lignes fléchées, le tube enveloppe étant fermé à son extrémité éloignée du brûleur par un élément de fermeture 15.

Grâce à la présence des ouies 14, le tube radiant peut être utilisé même en position verticale. En effet, les ouies assurent une circulation suffisante des gaz de combustion même si le dernier tronçon était en appui sur le fond de l'enveloppe, après un déplacement axial de ce tronçon ou de plusieurs tronçons. A cette fin la demi-longueur axiale d'un manchon est supérieure à la somme des jeux axiaux entre le tube et les éléments adjacents et les différents tronçons.

Etant donné que les tronçons de tube 6 présentent un diamètre interne et externe constant sur toute leur longueur, on peut adapter le tube 5 à toute longueur utile par simple découpe de tronçons ou d'un tronçon à la longueur désirée ou construire le tube à partir d'un certain nombre de modules standards de différentes longueurs.

## Revendications

1. Tube interne en céramique notamment pour tube radiant à recirculation des gaz brûlés fournis par un brûleur comprenant un tube enveloppe entourant coaxialement ledit tube interne, ce dernier étant constitué d'une pluralité de tronçons de tube axialement alignés et assemblés par des moyens d'assemblage comprenant un organe annulaire entourant coaxialement les tronçons de tube au niveau de la zone de jonction, caractérisé en ce que les tronçons de tube (6) sont disposés bout-à-bout et que les moyens d'assemblage sont formés par un manchon (8) qui entourent coaxialement les extrémités des tronçons (6) à relier et dont la surface radialement interne comprend avantageusement au milieu de sa longueur une collerette annulaire (9) radialement saillant vers l'intérieur et s'engageant entre les deux tronçons de tube (6) à relier, les parties de surface interne (10) situés de part et d'autre de la collerette (9) vont en s'élargissant progressivement vers les extrémités du manchon, et en ce que la collerette annulaire précitée (9) présente avantageusement sensiblement le même diamètre radialement interne que les tronçons de tube (6) et lesdites parties de surface interne (10) présentent au niveau de la collerette un diamètre qui est légèrement plus grand que le diamètre externe de ces tronçons de façon à permettre un jeu radial entre des extrémités des trançons dans le manchon et un désaxage approprié des tronçons.

2. Tube selon la revendication 1, caractérisé en ce que le manchon (8) porte sur sa surface cylindrique radialement externe des nervures de centrage (12) dans le tube enveloppe (1).

3. Tube selon l'une des revendications précédentes, caractérisé en ce qu'il comprend à ses extrémités des moyens pour son centrage à l'intérieur du tube enveloppe (1), tels que des nervures radiales (13).

4. Tube selon l'une des revendications précédentes, caractérisé en ce qu'il comporte à ses extrémités des ouies (14) favorisant la circulation des gaz.

5. Tube selon l'une des revendications précédentes, caractérisé en ce que la longueur de la zone de recouvrement axiale d'un tronçon de tube, d'un manchon (8) est supérieure à la somme des jeux axiaux entre le tube et les éléments adjacents et les différents tronçons (6).

6. Tube selon l'une des revendications précédentes, caractérisé en ce qu'un tronçon de tube (6) présente un diamètre interne et externe constant sur toute sa longueur axiale.

## Claims

1. Internal ceramic tube in particular for a radiant tube for recirculation of the burnt gases supplied by a burner, comprising an envelope tube coaxially surrounding the said internal tube, the latter consisting of a plurality of axially aligned tube sections assembled by assembling means comprising an annular member coaxially surrounding the tube sections at the junction zone, characterized in that the tube sections (6) are disposed end-to-end and in that the assembling means are formed of a sleeve (8) which coaxially surrounds the ends of the sections (6) to be connected and the radially inner surface of which advantageously comprises in the middle of its length a radially inwards projecting annular collar (9) fitted between both tube sections (6) to be connected, the inner surface portions (10) located on either side of the collar (9) extending in gradually widening relationship towards the ends of the sleeve and in that the aforesaid annular collar (9) advantageously exhibits substantially the same radially internal diameter as the tube sections (6) and the said internal surface portions (10) exhibit at the collar a diameter which is slightly greater than the external diameter of these sections so as to provide a radial play between the ends of the sections within the sleeve and a proper offset of the sections.

2. Tube according to claim 1, characterized in that the sleeve (8) carries on its radially external cyclindrical surface ribs (12) for centering within the envelope tube (1).

3. Tube according to one of the foregoing claims, characterized in that it comprises at its ends means for its centering inside of the envelope tube (1), such as radial ribs (13).

4. Tube according to one of the preceding claims, characterized in that it comprises at its ends openings (14) promoting the circulation of the gases.

5. Tube according to one of the foregoing claims, characterized in that the length of the axial overlap of a tube section by a sleeve (8) is greater than the sum of the axial clearances between the tube and the adjacent elements and the different sections (6).

6. Tube according to one of the foregoing claims, characterized in that one tube section (6) exhibits a constant internal and external diameter throughout its actual length.

**Patentansprüche**

1. Keramisches Innenrohr insbesondere für Strahlheizrohr mit Rückführung der durch einen Brenner gelieferten verbrannten Gase, mit einem das besagte Innenrohr koaxial umgebenden Umhüllungsrohr, wobei das Innenrohr aus einer Vielzahl von axial fluchtenden und durch Zusammenfügungsmittel zusammengebauten Rohrschüssen besteht, welche Mittel ein die Rohrschüsse im Bereich der Verbindungszone koaxial umgebendes rohrförmiges Glied aufweisen, dadurch gekennzeichnet, dass die Rohrschüsse (6) endweise angeordnet sind und dass die Zusammenfügungsmittel durch eine Muffe (8) gebildet werden, die die Enden der zu verbindenden Schüsse (6) koxial umgeben und deren radial innere Fläche vorteilhaft in der Mitte ihrer Länge einen radial nach innen vorstehenden und sich zwischen den beiden zu verbindenden Rohrschüssen (6) einfügenden ringförmigen Bund (9) aufweist, wobei die beiderseits des Bundes (9) gelegenen Innenflächenbereiche (10) sich fortschreitend zu den Enden der Muffe hin erweitern und dass der vorgenannte ringförmige Bund (9) vorteilhaft etwa denselben radial inneren Durchmesser als die Rohrschüsse (6) aufweist und die besagten Innenflächenbereiche (10) im Bereich des Bundes einen Durchmesser, der etwas grösser als der Aussendurchmesser dieser Schüsse ist, aufweisen, um ein radiales Spiel zwischen Enden der Schüsse in der Muffe und einen geeigneten Versatz der Schüsse zu gestatten.

2. Rohr nach Anspruch 1, dadurch gekennzeichnet, dass die Muffe (8) an ihrer radial äusseren zylindrischen Oberfläche Rippen (12) zum Zentrieren in dem Umhüllungsrohr (1) trägt.

3. Rohr nach einem der vorangehenden Ansprüche, dadurch gekennzeichnet, dass es an seinen Enden Mittel für sein Zentrieren innerhalb des Umhüllungsrohres (1), wie radiale Rippen (13) aufweist.

4. Rohr nach einem der vorangehenden Ansprüche, dadurch gekennzeichnet, dass es an seinen Enden den Umlauf der Gase begünstigende Löcher (14) aufweist.

5. Rohr nach einem der vorangehenden Ansprüche, dadurch gekennzeichnet, dass die Länge des axialen Uberlappungsbereiches eines Rohrschusses durch eine Muffe (8) grösser als die Summe der axialen Spiele zwischen dem Rohr und den anschliessenen Elementen und den verschiedenen Schüssen (6) ist.

6. Rohr nach einem der vorangehenden Ansprüche, dadurch gekennzeichnet, dass ein Rohrschuss (6) einen über seine ganze Axiallänge konstanten Innen- und Aussendurchmesser aufweist.

Fig. 1

Fig. 2

Fig. 3